(19) Europäisches Patentamt
European Patent Office
Office européen des brevets

(11) EP 4 274 374 B1

(12) EUROPEAN PATENT SPECIFICATION

(45) Date of publication and mention
of the grant of the patent:
27.05.2026 Bulletin 2026/22

(51) International Patent Classification (IPC):
H04W 24/10 (2009.01)     H04B 17/318 (2015.01)
H04B 17/24 (2015.01)     H04W 92/10 (2009.01)

(21) Application number: 23199735.4

(22) Date of filing: 03.03.2017

(52) Cooperative Patent Classification (CPC):
H04B 17/24; H04B 17/328; H04W 24/10;
H04W 92/10

(54) **FILTERING FOR MEASUREMENT IN FIFTH GENERATION NETWORKS**

FILTERUNG ZUR MESSUNG IN NETZWERKEN DER FÜNFTEN GENERATION

FILTRAGE POUR MESURE DANS DES RÉSEAUX DE CINQUIÈME GÉNÉRATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: 19.08.2016 US 201662377295 P

(43) Date of publication of application:
08.11.2023 Bulletin 2023/45

(62) Document number(s) of the earlier application(s) in
accordance with Art. 76 EPC:
**17841776.2 / 3 501 200**

(73) Proprietor: **Apple Inc.**
**Cupertino, CA 95014 (US)**

(72) Inventors:
• YIU, Candy
Portlang, OR 97201 (US)
• DAVYDOV, Alexei Vladimirovich
Nizhny Novgorod 603132 (RU)
• TANG, Yang
San Jose, CA 95120 (US)
• HUANG, Rui
Beijing 100085 (CN)

(74) Representative: **Lang, Johannes**
**Bardehle Pagenberg Partnerschaft mbB
Patentanwälte, Rechtsanwälte
Prinzregentenplatz 7
81675 München (DE)**

(56) References cited:
**EP-A1- 2 790 440**

• **SAMSUNG: "Measurements for Cell-level
Mobility in High Frequency NR", vol. RAN WG2,
no. G◻teborg; 20160822 - 20160826, 12 August
2016 (2016-08-12), XP051133744, Retrieved from
the Internet <URL:http://www.3gpp.org/ftp/
tsg_ran/WG2_RL2/TSGR2_95/Docs/> [retrieved
on 20160812]**
• **SAMSUNG: "Discussion on Beam Measurement
and Tracking for 5G New Radio Interface in
mmWave Frequency Bands", vol. RAN WG2, no.
Dubrovnik, Croatia; 20160411 - 20160415, 1 April
2016 (2016-04-01), XP051082013, Retrieved from
the Internet <URL:http://www.3gpp.org/ftp/
tsg_ran/WG2_RL2/TSGR2_93bis/Docs/>
[retrieved on 20160401]**
• **ERICSSON: "Analysis of Mobility Measurements
in E-UTRAN", 3GPP DRAFT; R4-070191, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG4, no. St. Louis,
MO; 20070207, 7 February 2007 (2007-02-07),
XP050176677**

**Description**

TECHNICAL FIELD

Embodiments pertain to wireless communications. Some embodiments pertain to filtering and measurements. Some embodiments relate to filtering for measurements in fifth generation (5G) networks.

BACKGROUND

A user equipment (UE) may perform measurements in order to discover neighboring cells. As the foregoing illustrates, filtering for measurements in fifth generation (5G) networks may be desirable. The document "Measurements for Cell-level Mobility in High Frequency NR", 3GPP draft R2-165150, August 12, 2016, relates to LTE measurements and beam measurements in 5G. In particular, the document describes utilizing an average RSRP of the output of the beam-based layer 1/3 filtering. In other words, the document describes applying averaging after the layer 1/3 filtering.

SUMMARY OF INVENTION

The invention is defined by the appended claims. The dependent claims define advantageous embodiments. The embodiments and/or examples of the following description which are not covered by the appended claims are considered as not being part of the present invention.

BRIEF DESCRIPTION OF THE DRAWINGS

FIG. 1 A illustrates an example system in which UEs move from cell to cell, in accordance with some embodiments.
FIG. IB illustrates an example system with a UE within a beam, in accordance with some embodiments.
FIG. 2 is a graph illustrating an example beam tracking bump, in accordance with some embodiments.
FIG. 3 is a graph illustrating UE measurements for multiple time resource patterns (TRPs), in accordance with some embodiments.
FIG. 4 is a graph illustrating measurements of a cell that includes multiple TRPs, in accordance with some embodiments.
FIG 5 illustrates an example measurement model, in accordance with some embodiments.
FIG. 6 is a functional diagram of a wireless network in accordance with some embodiments.
FIG. 7 illustrates components of a communication device in accordance with some embodiments.
FIG. 8 illustrates a block diagram of a communication device in accordance with some embodiments.
FIG. 9 illustrates another block diagram of a communication device in accordance with some embodiments.

DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments.

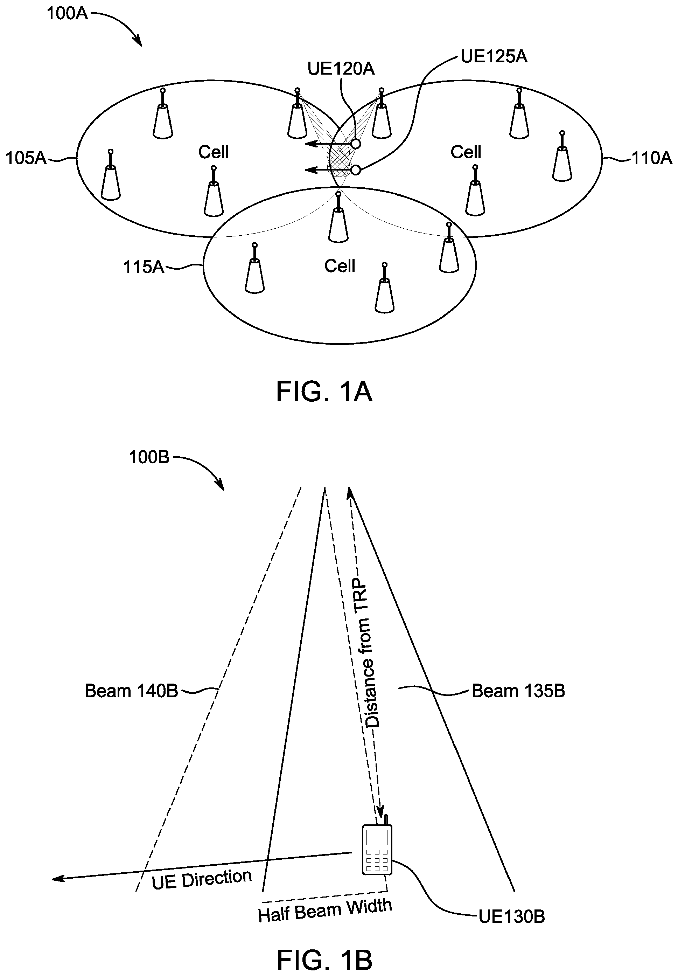

FIG. 1 A illustrates an example system 100A in which user equipment (UEs) move from cell to cell, in accordance with some embodiments. Three cells 105A, 110A, and 115A are illustrated. The UEs 120A and 125A move from cell 11 OA to cell 105 A.

FIG. IB illustrates an example system 100B with a UE 130B within a beam 135B, in accordance with some embodiments. FIG. IB shows the UE direction in which the UE 130B is moving, the half beam width of the beam 135B, and the distance of the UE 130B from the transmission reception point (TRP) of the beam 135B. According to some embodiments, the UE 130B switches from the beam 135B to the beam 140B as it moves leftward.

In FIG. 1A, three cells 105A, 110A, and 115A are illustrated. Each cell includes multiple TRPs. The UE 120A and the UE 125A are moving from cell 110A towards cell 105A. The UEs 120A and 125A perform measurement in order to discover neighbouring cells (cells 105A or 115A). According to one TRP scenario shown in FIG. 1B, the UE 130B is moving. The UE 130B starts at the highest antenna gain (at half beam width) within the serving beam 135B. The UE 130B is moving to the left, and the TRP beam tracking is performed and switch to the adjacent beam 140B. At the same time, the UE 130B is performing measurement to the serving cell and the neighbour cells.

According to some examples of wireless technology (e.g., RAN2 # 94) the following agreements may be implemented. A new radio (NR) evolved NodeB (eNB) corresponds to one or many TRPs. As baseline, NR supports a state with network controlled mobility handling and a state with UE controlled mobility. For typical NR inter-eNB network controlled mobility, the measurement configuration which is provided to the UE to configure measurements (e.g. to avoid the need to provide detailed cell level information) may be minimized. The context move as a consequence of UE-based mobility may be minimized. Two levels of network controlled mobility may be implemented: (1) radio resource control (RRC) driven at cell level, and (2) zero or minimum RRC involvement at media access control (MAC) or physical (PHY) layers.

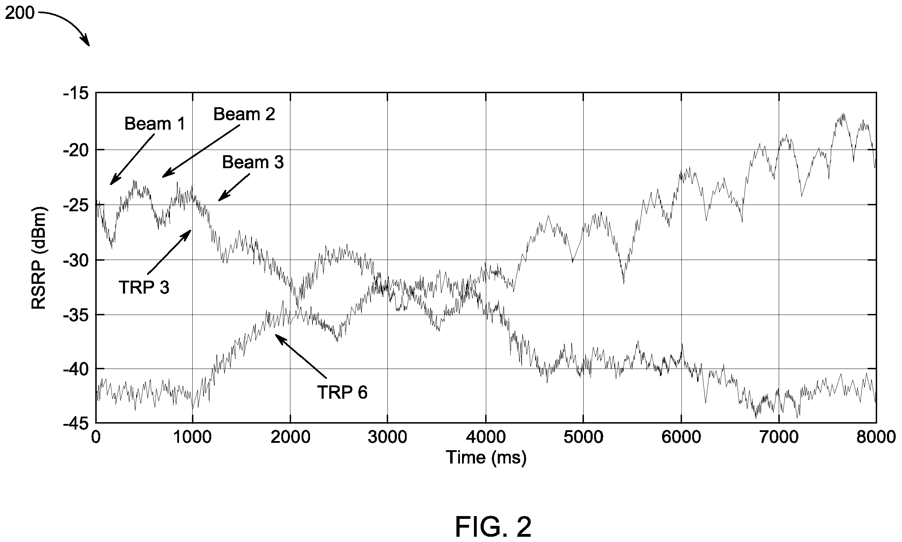

FIG. 2 is a graph 200 illustrating an example beam tracking bump within the same TRP under a line-of-sight (LoS) case. FIG. 2 shows the beam tracking within the same TRP when the UE is moving at 60 km/h. Two TRPs are shown in FIG. 2. The serving TRP 3 and the neighboring TRP 6 are indicated. The UE initially is connected to beam 1 at TRP3. Then due to mobility, the beam tracking is performed and the TRP perform beam switch to beam 2 and create the bump in measurement. This continue during the mobility for both the serving TRP and the neighboring TRP. The bump is about 6-7 dB in LoS case. In some cases, the handover decision may become more challenging.

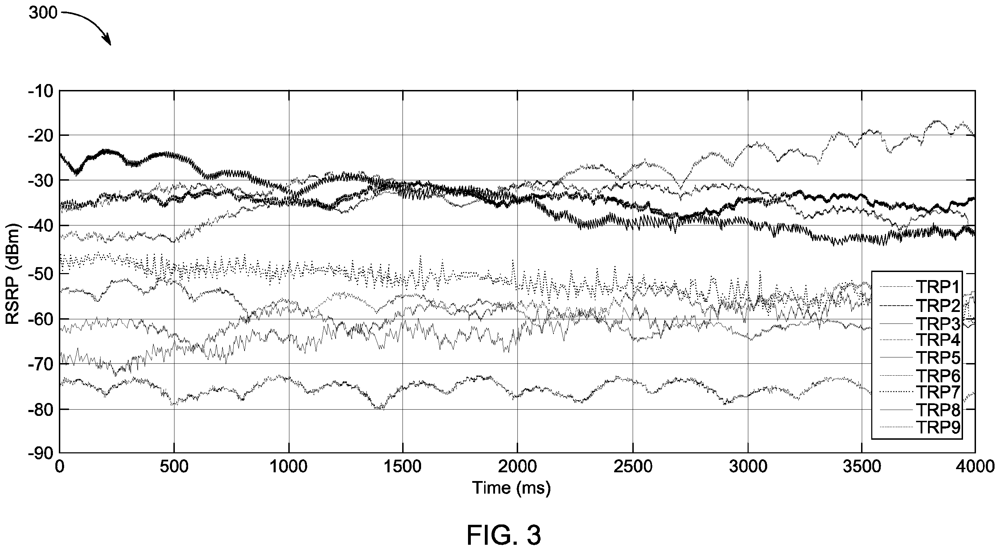

FIG. 3 is a graph 300 illustrating UE measurements for multiple time resource patterns (TRPs). FIG. 3 illustrates a LoS case when the UE is moving at 120 km/h.

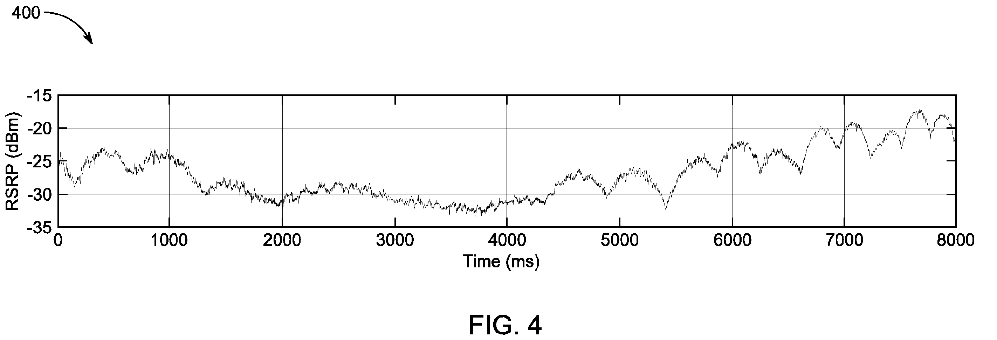

Some aspects of the subject technology relate to the measurement on a cell which consists of multiple TRPs, for example, as shown in FIG. 1A. An individual TRP may be transparent to the UE 120A. In some cases, the UE 120A measures at the cell level. That means the measurement of a cell is the maximum reference signal received power (RSRP) among all the beams across all TRPs. FIG. 4 is a graph 400 illustrating measurements of a cell that includes multiple TRPs. The measured signal looks very similar to the individual TRP level.

Some aspects of the subject technology are directed to beam-based measurement and issues that can be resolved by introducing different filtering to reduce the beam bump. Some aspects introduce a new filter for 5G measurement to resolve the large difference in measurement in RSRP due to the beam tracking bump.

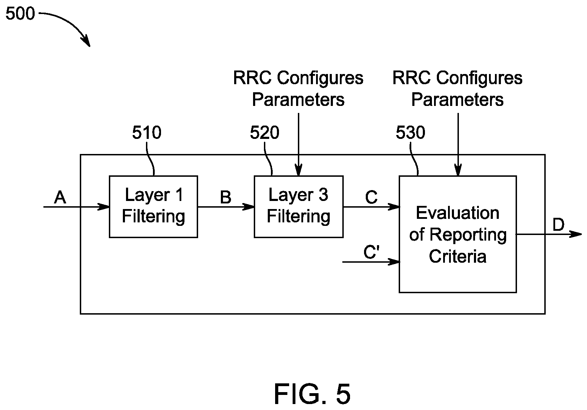

FIG 5 illustrates an example measurement model 500. The measurement model 500 includes layer 1 (L1) filtering 510, layer 3 (L3) filtering 520, and evaluation of reporting criteria 530.

As illustrated in FIG. 5, at point A measurements (samples) internal to the physical layer are input to the L1 filtering 510. The L1 filtering 510 applies internal layer 1 filtering of the inputs measured at point A. The filtering is implementation dependent. How the measurements are actually executed in the physical layer by an implementation (inputs A and Layer 1 filtering 510) is not constrained by the standard, according to some implementations.

At point B, a measurement reported by the L1 filtering 510 is provided to the L3 filtering 520. The L3 filtering 520 is filtering performed on the measurements provided at point B. The behavior of the Layer 3 filters are standardized and the configuration of the layer 3 filters is provided by RRC signaling. The filtering reporting period at C is equal to one measurement period at B.

At point C, a measurement processed by the L3 filtering 520 is collected. The reporting rate is identical to the reporting rate at point B. This measurement is used as input for one or more evaluations of the reporting criteria 530.

The evaluation of the reporting criteria 530 checks whether actual measurement reporting is to be completed at point D. The evaluation can be based on more than one flow of measurements at reference point C, for example, to compare between different measurements. This is illustrated by inputs at points C and C'. The UE evaluates the reporting criteria at least every time a new measurement result is reported at points C or C'. The reporting criteria are standardized and the configuration is provided by RRC signaling (UE measurements). At point D, a measurement report information message is sent on the radio interface.

Layer 1 filtering 510 introduces a certain level of measurement averaging or summing. How and when the UE exactly performs the required measurements is implementation specific to the point that the output at point B fulfils the performance requirements. Layer 3 filtering 520 does not introduce any delay in the sample availability between points B and C. Measurements at points C and C' are the input used in the evaluation of reporting criteria 530.

In some cases, there are total number of NxM measurements for each TRP, where N is number of TRP beams and M is the number of UE beams. RSRP(i,j) represents the RSRP measurement value for the TRP $i^{th}$ beam and the UE $j^{th}$ beam. Max(RSRP(i,j)) for all i and j represents the best beam pair among all TRP beams and UE beams, where $TRP_{best}$ is the best network beam and $UE_{best}$ is the best UE beam.

According to a first embodiment, an additional average filter is added at point B or point C. In some cases, all beams evaluate to a cell of a network level measurements and cell level sample in the L1 and L3 filters. In some cases, all beams apply L1 filter and evaluate to a cell of a network to apply L3 filter. In some cases, all beams apply L1 and L3 filter and then evaluate to a cell of a network measurements. The average filter may apply one or more of the following operations.

According to a first option, the average filter averages over all beams measured: *average(RSRP(i,j)), for all i and j.*

According to a second option, the average filter averages over all TRP beams using the best (e.g., highest value) UE beam: *average(RSRP(i, $UE_{best}$)) for all i.*

According to a third option, the average filter averages over the best N TRP beams using the best (e.g., highest value) UE beam, where N can be configured by the network or a fixed value from a specification: *average(hestN(RSRP(i, $UE_{best}$))) for all i, where bestN(\*) denotes the best N values.*

According to a fourth option, the average filter averages the N best (e.g., highest value) beams measured: *average(bestN(RSRP(i,j))), for all i and j, where bestN(*) denotes the best N values.*

According to a fifth option, the average filter averages all beams whose measurements exceed a threshold, the threshold can be configured by the network or a fixed value from a specification: *average( (RSRP(i,j))), for all i and j where RSRP(i,j) > threshold.*

According to a second embodiment, the L3 filter 520 is modified to incorporate the average factor according to Equation 1.

$$F_n = (1-a) \cdot F_{n-1} + a \cdot Avg(M_{n,i,j}), \textit{for all } i,j$$

*Equation 1*

Equation 1 provides a formula for filtering the measurement result, before using the evaluation of reporting criteria 530 for measurement reporting. In Equation 1, $M_{n,i,j}$ is the latest received measurement result from the physical layer, where i is the TRP beam and j is the UE beam. $F_n$ is the updated filtered measurement result, that is used for evaluation of reporting criteria or for measurement reporting. $F_{n-1}$ is the old filtered measurement result, where $F_0$ is set to $M_1$ when the first measurement result from the physical layer is received. Furthermore, $a = 1/2^{(k/4)}$, where $k$ is the filter coefficient for the corresponding measurement quantity received by the quantity configuration.

The filter may be adapted such that the time characteristics of the filter are preserved at different input rates. In some cases, if $k$ is set to 0, no layer 3 filtering is applicable. In some cases, the filtering is performed in the same domain as used for evaluation of reporting criteria or for measurement reporting, for example, logarithmic filtering for logarithmic measurements. The filter input rate may be implementation dependent.

It should be noted that Equation 1 may not apply to quantities configured solely for UE receive-transmit time difference, SSTD (SFN (system frame number) and subframe timing difference) measurements and received signal strength indicator (RSSI), channel occupancy measurements, wireless local area network (WLAN) measurements of band, carrier information, Available Admission Capacity, Backhaul Bandwidth, Channel Utilization, and Station Count, and uplink packet data convergence protocol (PDCP) Packet Delay per quality-of-service class identifier (QCI) measurement. In other words, Equation 1 may not apply for the types of measurements where the UE ignores the trigger quantity and report quantity.

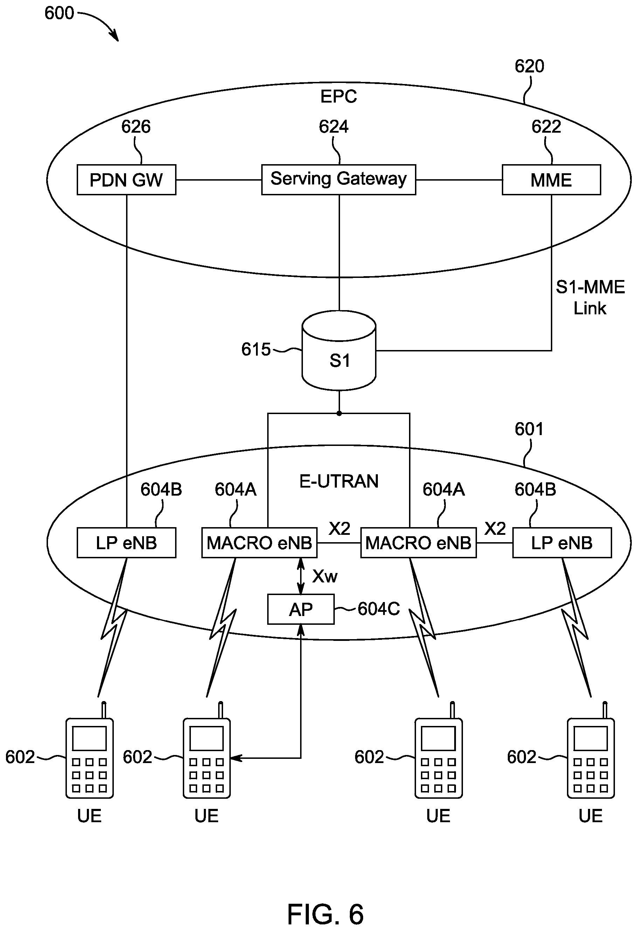

FIG. 6 shows an example of a portion of an end-to-end network architecture of a Long Term Evolution (LTE) network with various components of the network in accordance with some embodiments. As used herein, an LTE network refers to both LTE and LTE Advanced (LTE-A) networks as well as other versions of LTE networks to be developed. The network 600 may comprise a radio access network (RAN) (e.g., as depicted, the E-UTRAN or evolved universal terrestrial radio access network) 601 and core network 620 (e.g., shown as an evolved packet core (EPC)) coupled together through an S1 interface 615. For convenience and brevity, only a portion of the core network 620, as well as the RAN 601, is shown in the example.

The subject technology may be implemented in NR or LTE, as described below. In NR, a 5G NodeB (gNB) corresponds to a LTE eNB. In NR, the Xn interface corresponds to the X2 interface of LTE. In NR, TRP corresponds to LPN of LTE. In conjunction with FIGS. 6-9, various implementations are discussed in conjunction with LTE. However, the subject technology may also be implemented in a NR environment or any other cellular environment.

The core network 620 may include a mobility management entity (MME) 622, serving gateway (serving GW) 624, and packet data network gateway (PDN GW) 626. The RAN 601 may include evolved NodeBs (eNBs) 604 (which may operate as base stations) for communicating with user equipment (UE) 602. The eNBs 604 may include macro eNBs 604a and low power (LP) eNBs 604b. The UEs 602 may correspond to any of the UEs 120A, 125A, and 130B of FIGS. 1A-1B.

The MME 622 may be similar in function to the control plane of legacy Serving GPRS Support Nodes (SGSN). The MME 622 may manage mobility aspects in access such as gateway selection and tracking area list management. The serving GW 624 may terminate the interface toward the RAN 601, and route data packets between the RAN 601 and the core network 620. In addition, the serving GW 624 may be a local mobility anchor point for inter-eNB handovers and also may provide an anchor for inter-3GPP mobility. Other responsibilities may include lawful intercept, charging, and some policy enforcement. The serving GW 624 and the MME 622 may be implemented in one physical node or separate physical nodes.

The PDN GW 626 may terminate a SGi interface toward the packet data network (PDN). The PDN GW 626 may route data packets between the EPC 620 and the external PDN, and may perform policy enforcement and charging data collection. The PDN GW 626 may also provide an anchor point for mobility devices with non-LTE access. The external PDN can be any kind of IP network, as well as an IP Multimedia Subsystem (IMS) domain. The PDN GW 626 and the serving GW 624 may be implemented in a single physical node or separate physical nodes.

The eNBs 604 (macro and micro) may terminate the air interface protocol and may be the first point of contact for a UE 602. In some embodiments, an eNB 604 may fulfill various logical functions for the RAN 601 including, but not limited to, RNC (radio network controller functions) such as radio bearer management, uplink and downlink dynamic radio resource management and data packet scheduling, and mobility management. In accordance with embodiments, UEs 602 may be configured to communicate orthogonal frequency division multiplexed (OFDM) communication signals with an eNB 604 over a multicarrier communication channel in accordance with an OFDMA communication technique. The OFDM signals may comprise a plurality of orthogonal subcarriers.

The S1 interface 615 may be the interface that separates the RAN 601 and the EPC 620. It may be split into two parts: the S1-U, which may carry traffic data between the eNBs 604 and the serving GW 624, and the S1-MME, which may be a signaling interface between the eNBs 604 and the NME 622. The X2 interface may be the interface between eNBs 604. The X2 interface may comprise two parts, the X2-C and X2-U. The X2-C may be the control plane interface between the eNBs 604, while the X2-U may be the user plane interface between the eNBs 604.

With cellular networks, LP cells 604b may be typically used to extend coverage to indoor areas where outdoor signals do not reach well, or to add network capacity in areas with dense usage. In particular, it may be desirable to enhance the coverage of a wireless communication system using cells of different sizes, macrocells, microcells, picocells, and femtocells, to boost system performance. The cells of different sizes may operate on the same frequency band, or may operate on different frequency bands with each cell operating in a different frequency band or only cells of different sizes operating on different frequency bands. As used herein, the term LP eNB refers to any suitable relatively LP eNB for implementing a smaller cell (smaller than a macro cell) such as a femtocell, a picocell, or a microcell. Femtocell eNBs may be typically provided by a mobile network operator to its residential or enterprise customers. A femtocell may be typically the size of a residential gateway or smaller and generally connect to a broadband line. The femtocell may connect to the mobile operator's mobile network and provide extra coverage in a range of typically 30 to 60 meters. Thus, a LP eNB 604b might be a femtocell eNB since it is coupled through the PDN GW 626. Similarly, a picocell may be a wireless communication system typically covering a small area, such as in-building (offices, shopping malls, train stations, etc.), or more recently in-aircraft. A picocell eNB may generally connect through the X2 link to another eNB such as a macro eNB through its base station controller (BSC) functionality. Thus, LP eNB may be implemented with a picocell eNB since it may be coupled to a macro eNB 604a via an X2 interface. Picocell eNBs or other LP eNBs LP eNB 604b may incorporate some or all functionality of a macro eNB LP eNB 604a. In some cases, this may be referred to as an access point base station or enterprise femtocell.

In some embodiments, the UE 602 may communicate with an access point (AP) 604c. The AP 604c may use only the unlicensed spectrum (e.g., WiFi bands) to communicate with the UE 602. The AP 604c may communicate with the macro eNB 604A (or LP eNB 604B) through an Xw interface. In some embodiments, the AP 604c may communicate with the UE 602 independent of communication between the UE 602 and the macro eNB 604A. In other embodiments, the AP 604c may be controlled by the macro eNB 604A and use LWA, as described in more detail below.

Communication over an LTE network may be split up into 8ms frames, each of which may contain ten 1ms subframes. Each subframe of the frame, in turn, may contain two slots of 0.5ms. Each subframe may be used for uplink (UL) communications from the UE to the eNB or downlink (DL) communications from the eNB to the UE. In one embodiment, the eNB may allocate a greater number of DL communications than UL communications in a particular frame. The eNB may schedule transmissions over a variety of frequency bands ($f_1$ and $f_2$). The allocation of resources in subframes used in one frequency band and may differ from those in another frequency band. Each slot of the subframe may contain 7-7 OFDM symbols, depending on the system used. In one embodiment, the subframe may contain 12 subcarriers. A downlink resource grid may be used for downlink transmissions from an eNB to a UE, while an uplink resource grid may be used for uplink transmissions from a UE to an eNB or from a UE to another UE. The resource grid may be a time-frequency grid, which is the physical resource in the downlink in each slot. The smallest time-frequency unit in a resource grid may be denoted as a resource element (RE). Each column and each row of the resource grid may correspond to one OFDM symbol and one OFDM subcarrier, respectively. The resource grid may contain resource blocks (RBs) that describe the mapping of physical channels to resource elements and physical RBs (PRBs). A PRB may be the smallest unit of resources that can be allocated to a UE. A resource block may be 180 kHz wide in frequency and 1 slot long in time. In frequency, resource blocks may be either 12 x 15 kHz subcarriers or 24 x 8.5 kHz subcarriers wide. For most channels and signals, 12 subcarriers may be used per resource block, dependent on the system bandwidth. In Frequency Division Duplexed (FDD) mode, both the uplink and downlink frames may be 8ms and frequency (full-duplex) or time (half-duplex) separated. In Time Division Duplexed (TDD), the uplink and downlink subframes may be transmitted on the same frequency and are multiplexed in the time domain. The duration of the resource grid 400 in the time domain corresponds to one subframe or two resource blocks. Each resource grid may comprise 12 (subcarriers) *14 (symbols) =168 resource elements.

Each OFDM symbol may contain a cyclic prefix (CP) which may be used to effectively eliminate Inter Symbol Interference (ISI), and a Fast Fourier Transform (FFT) period. The duration of the CP may be determined by the highest anticipated degree of delay spread. Although distortion from the preceding OFDM symbol may exist within the CP, with a CP of sufficient duration, preceding OFDM symbols do not enter the FFT period. Once the FFT period signal is received and digitized, the receiver may ignore the signal in the CP.

There may be several different physical downlink channels that are conveyed using such resource blocks, including the physical downlink control channel (PDCCH) and the physical downlink shared channel (PDSCH). Each subframe may be partitioned into the PDCCH and the PDSCH. The PDCCH may normally occupy the first two symbols of each subframe and carries, among other things, information about the transport format and resource allocations related to the PDSCH channel, as well as H-ARQ information related to the uplink shared channel. The PDSCH may carry user data and higher layer signaling to a UE and occupy the remainder of the subframe. Typically, downlink scheduling (assigning control and shared channel resource blocks to UEs within a cell) may be performed at the eNB based on channel quality information provided from the UEs to the eNB, and then the downlink resource assignment information may be sent to each UE on the PDCCH used for (assigned to) the UE. The PDCCH may contain downlink control information (DCI) in one of a number of formats that indicate to the UE how to find and decode data, transmitted on PDSCH in the same subframe, from the resource grid. The DCI format may provide details such as number of resource blocks, resource allocation type, modulation scheme, transport block, redundancy version, coding rate etc. Each DCI format may have a cyclic redundancy code (CRC) and be scrambled with a Radio Network Temporary Identifier (RNTI) that identifies the target UE for which the PDSCH is intended. Use of the UE-specific RNTI may limit decoding of the DCI format (and hence the corresponding PDSCH) to only the intended UE.

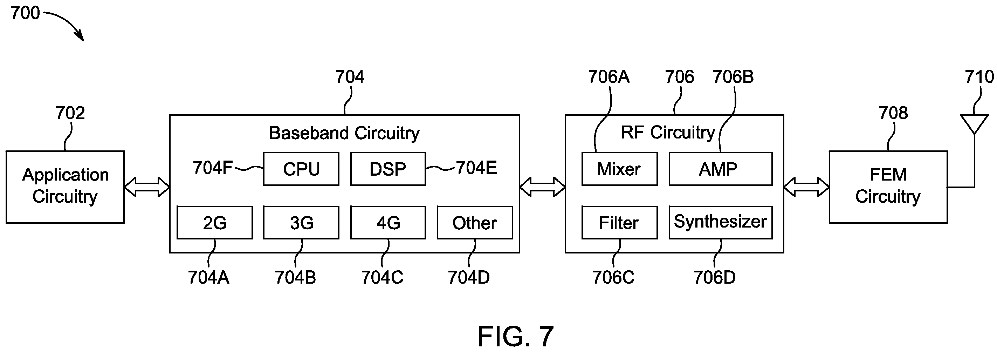

Embodiments described herein may be implemented into a system using any suitably configured hardware and/or software. FIG. 7 illustrates components of a UE in accordance with some embodiments. At least some of the components shown may be used in an eNB or MME, for example, such as the UE 602 or eNB 604 shown in FIG. 6 or the nUE 90, wUE 120 or E-UTRAN BS 130 of FIG. 1. The UE 700 and other components may be configured to use the synchronization signals as described herein. The UE 700 may be one of the UEs 702 shown in FIG. 1 and may be a stationary, non-mobile device or may be a mobile device. In some embodiments, the UE 700 may include application circuitry 702, baseband circuitry 704, Radio Frequency (RF) circuitry 706, front-end module (FEM) circuitry 708 and one or more antennas 710, coupled together at least as shown. At least some of the baseband circuitry 704, RF circuitry 706, and FEM circuitry 708 may form a transceiver. In some embodiments, other network elements, such as the eNB may contain some or all of the components shown in FIG. 7. Other of the network elements, such as the MME, may contain an interface, such as the S1 interface, to communicate with the eNB over a wired connection regarding the UE.

The application or processing circuitry 702 may include one or more application processors. For example, the application circuitry 702 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 704 may include circuitry such as, but not limited to, one or more single-core or multi-core processors. The baseband circuitry 704 may include one or more baseband processors and/or control logic to process baseband signals received from a receive signal path of the RF circuitry 706 and to generate baseband signals for a transmit signal path of the RF circuitry 706. Baseband processing circuity 704 may interface with the application circuitry 702 for generation and processing of the baseband signals and for controlling operations of the RF circuitry 706. For example, in some embodiments, the baseband circuitry 704 may include a second generation (2G) baseband processor 704a, third generation (3G) baseband processor 704b, fourth generation (4G) baseband processor 704c, and/or other baseband processor(s) 704d for other existing generations, generations in development or to be developed in the future (e.g., fifth generation (5G), 7G, etc.). The baseband circuitry 704 (e.g., one or more of baseband processors 704a-d) may handle various radio control functions that enable communication with one or more radio networks via the RF circuitry 706. The radio control functions may include, but are not limited to, signal modulation/demodulation, encoding/decoding, radio frequency shifting, etc. In some embodiments, modulation/demodulation circuitry of the baseband circuitry 704 may include FFT, precoding, and/or constellation mapping/demapping functionality. In some embodiments, encoding/decoding circuitry of the baseband circuitry 704 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 704 may include elements of a protocol stack such as, for example, elements of an evolved universal terrestrial radio access network (E-UTRAN) protocol including, for example, physical (PHY), media access control (MAC), radio link control (RLC), packet data convergence protocol (PDCP), and/or radio resource control (RRC) elements. A central processing unit (CPU) 704e of the baseband circuitry 704 may be configured to run elements of the protocol stack for signaling of the PHY, MAC, RLC, PDCP and/or RRC layers. In some embodiments, the baseband circuitry may include one or more audio digital signal processor(s) (DSP) 704f. The audio DSP(s) 704f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 704 and the application circuitry 702 may be implemented together such as, for example, on a system on a chip (SOC).

In some embodiments, the baseband circuitry 704 may provide for communication compatible with one or more radio technologies. For example, in some embodiments, the baseband circuitry 704 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 704 is configured to support radio communications of more than one wireless protocol may be referred to as multi-mode baseband circuitry. In some embodiments, the device can be configured to operate in accordance with communication standards or other protocols or standards, including Institute of Electrical and Electronic Engineers (IEEE) 602.16 wireless technology (WiMax), IEEE 602.11 wireless technology (WiFi) including IEEE 602.11 ad, which operates in the 70 GHz millimeter wave spectrum, various other wireless technologies such as global system for mobile communications (GSM), enhanced data rates for GSM evolution (EDGE), GSM EDGE radio access network (GERAN), universal mobile telecommunications system (UMTS), UMTS terrestrial radio access network (UTRAN), or other 2G, 3G, 4G, 6G, etc. technologies either already developed or to be developed.

RF circuitry 706 may enable communication with wireless networks using modulated electromagnetic radiation through a non-solid medium. In various embodiments, the RF circuitry 706 may include switches, filters, amplifiers, etc. to facilitate the communication with the wireless network. RF circuitry 706 may include a receive signal path which may include circuitry to down-convert RF signals received from the FEM circuitry 708 and provide baseband signals to the baseband circuitry 704. RF circuitry 706 may also include a transmit signal path which may include circuitry to up-convert baseband signals provided by the baseband circuitry 704 and provide RF output signals to the FEM circuitry 708 for transmission.

In some embodiments, the RF circuitry 706 may include a receive signal path and a transmit signal path. The receive signal path of the RF circuitry 706 may include mixer circuitry 706a, amplifier circuitry 706b and filter circuitry 706c. The transmit signal path of the RF circuitry 706 may include filter circuitry 706c and mixer circuitry 706a. RF circuitry 706 may also include synthesizer circuitry 706d for synthesizing a frequency for use by the mixer circuitry 706a of the receive signal path and the transmit signal path. In some embodiments, the mixer circuitry 706a of the receive signal path may be configured to down-convert RF signals received from the FEM circuitry 708 based on the synthesized frequency provided by synthesizer circuitry 706d. The amplifier circuitry 706b may be configured to amplify the down-converted signals and the filter circuitry 706c may be a low-pass filter (LPF) or band-pass filter (BPF) configured to remove unwanted signals from the down-converted signals to generate output baseband signals. Output baseband signals may be provided to the baseband circuitry 704 for further processing. In some embodiments, the output baseband signals may be zero-frequency baseband signals, although this is not a requirement. In some embodiments, mixer circuitry 706a of the receive signal path may comprise passive mixers, although the scope of the embodiments is not limited in this respect.

In some embodiments, the mixer circuitry 706a of the transmit signal path may be configured to up-convert input baseband signals based on the synthesized frequency provided by the synthesizer circuitry 706d to generate RF output signals for the FEM circuitry 708. The baseband signals may be provided by the baseband circuitry 704 and may be filtered by filter circuitry 706c. The filter circuitry 706c may include a low-pass filter (LPF), although the scope of the embodiments is not limited in this respect.

In some embodiments, the mixer circuitry 706a of the receive signal path and the mixer circuitry 706a of the transmit signal path may include two or more mixers and may be arranged for quadrature downconversion and/or upconversion respectively. In some embodiments, the mixer circuitry 706a of the receive signal path and the mixer circuitry 706a of the transmit signal path may include two or more mixers and may be arranged for image rejection (e.g., Hartley image rejection). In some embodiments, the mixer circuitry 706a of the receive signal path and the mixer circuitry 706a may be arranged for direct downconversion and/or direct upconversion, respectively. In some embodiments, the mixer circuitry 706a of the receive signal path and the mixer circuitry 706a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 706 may include analog-to-digital converter (ADC) and digital-to-analog converter (DAC) circuitry and the baseband circuitry 704 may include a digital baseband interface to communicate with the RF circuitry 706.

In some dual-mode embodiments, a separate radio IC circuitry may be provided for processing signals for each spectrum, although the scope of the embodiments is not limited in this respect.

In some embodiments, the synthesizer circuitry 706d may be a fractional-N synthesizer or a fractional N/N+1 synthesizer, although the scope of the embodiments is not limited in this respect as other types of frequency synthesizers may be suitable. For example, synthesizer circuitry 706d may be a delta-sigma synthesizer, a frequency multiplier, or a synthesizer comprising a phase-locked loop with a frequency divider.

The synthesizer circuitry 706d may be configured to synthesize an output frequency for use by the mixer circuitry 706a of the RF circuitry 706 based on a frequency input and a divider control input. In some embodiments, the synthesizer circuitry 706d may be a fractional N/N+1 synthesizer.

In some embodiments, frequency input may be provided by a voltage controlled oscillator (VCO), although that is not a requirement. Divider control input may be provided by either the baseband circuitry 704 or the applications processor 702 depending on the desired output frequency. In some embodiments, a divider control input (e.g., N) may be determined from a look-up table based on a channel indicated by the applications processor 702.

Synthesizer circuitry 706d of the RF circuitry 706 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 706d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency ($f_{LO}$). In some embodiments, the RF circuitry 706 may include an IQ/polar converter.

FEM circuitry 708 may include a receive signal path which may include circuitry configured to operate on RF signals received from one or more antennas 710, amplify the received signals and provide the amplified versions of the received signals to the RF circuitry 706 for further processing. FEM circuitry 708 may also include a transmit signal path which may include circuitry configured to amplify signals for transmission provided by the RF circuitry 706 for transmission by one or more of the one or more antennas 710.

In some embodiments, the FEM circuitry 708 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 706). The transmit signal path of the FEM circuitry 708 may include a power amplifier (PA) to amplify input RF signals (e.g., provided by RF circuitry 706), and one or more filters to generate RF signals for subsequent transmission (e.g., by one or more of the one or more antennas 710.

In some embodiments, the UE 700 may include additional elements such as, for example, memory/storage, display, camera, sensor, and/or input/output (I/O) interface as described in more detail below. In some embodiments, the UE 700 described herein may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), or other device that may receive and/or transmit information wirelessly. In some embodiments, the UE 700 may include one or more user interfaces designed to enable user interaction with the system and/or peripheral component interfaces designed to enable peripheral component interaction with the system. For example, the UE 700 may include one or more of a keyboard, a keypad, a touchpad, a display, a sensor, a non-volatile memory port, a universal serial bus (USB) port, an audio jack, a power supply interface, one or more antennas, a graphics processor, an application processor, a speaker, a microphone, and other I/O components. The display may be an LCD or LED screen including a touch screen. The sensor may include a gyro sensor, an accelerometer, a proximity sensor, an ambient light sensor, and a positioning unit. The positioning unit may communicate with components of a positioning network, e.g., a global positioning system (GPS) satellite.

The antennas 710 may comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas 710 may be effectively separated to take advantage of spatial diversity and the different channel characteristics that may result.

Although the UE 700 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

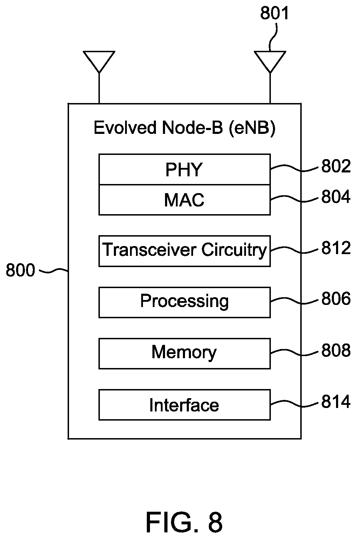

FIG. 8 is a block diagram of a communication device in accordance with some embodiments. The device may be a UE or eNB, for example, such as the UE 602 or eNB 604 shown in FIG. 6 or the nUE 90, wUE 120, or E-UTRAN BS 130 of FIG. 1 that may be configured to track the UE as described herein. The physical layer circuitry 802 may perform various encoding and decoding functions that may include formation of baseband signals for transmission and decoding of received signals. The communication device 800 may also include medium access control layer (MAC) circuitry 804 for controlling access to the wireless medium. The communication device 800 may also include processing circuitry 806, such as one or more single-core or multi-core processors, and memory 808 arranged to perform the operations described herein. The physical layer circuitry 802, MAC circuitry 804 and processing circuitry 806 may handle various radio control functions that enable communication with one or more radio networks compatible with one or more radio technologies. The radio control functions may include signal modulation, encoding, decoding, radio frequency shifting, etc. For example, similar to the device shown in FIG. 2, in some embodiments, communication may be enabled with one or more of a WMAN, a WLAN, and a WPAN. In some embodiments, the communication device 800 can be configured to operate in accordance with 3GPP standards or other protocols or standards, including WiMax, WiFi, WiGig, GSM, EDGE, GERAN, UMTS, UTRAN, or other 3G, 3G, 4G, 6G, etc. technologies either already developed or to be developed. The communication device 800 may include transceiver circuitry 812 to enable communication with other external devices wirelessly and interfaces 814 to enable wired communication with other external devices. As another example, the transceiver circuitry 812 may perform various transmission and reception functions such as conversion of signals between a baseband range and a Radio Frequency (RF) range.

The antennas 801 may comprise one or more directional or omnidirectional antennas, including, for example, dipole antennas, monopole antennas, patch antennas, loop antennas, microstrip antennas or other types of antennas suitable for transmission of RF signals. In some MIMO embodiments, the antennas 801 may be effectively separated to take advantage of spatial diversity and the different channel characteristics that may result.

Although the communication device 800 is illustrated as having several separate functional elements, one or more of the functional elements may be combined and may be implemented by combinations of software-configured elements, such as processing elements including DSPs, and/or other hardware elements. For example, some elements may comprise one or more microprocessors, DSPs, FPGAs, ASICs, RFICs and combinations of various hardware and logic circuitry for performing at least the functions described herein. In some embodiments, the functional elements may refer to one or more processes operating on one or more processing elements. Embodiments may be implemented in one or a combination of hardware, firmware and software. Embodiments may also be implemented as instructions stored on a computer-readable storage device, which may be read and executed by at least one processor to perform the operations described herein.

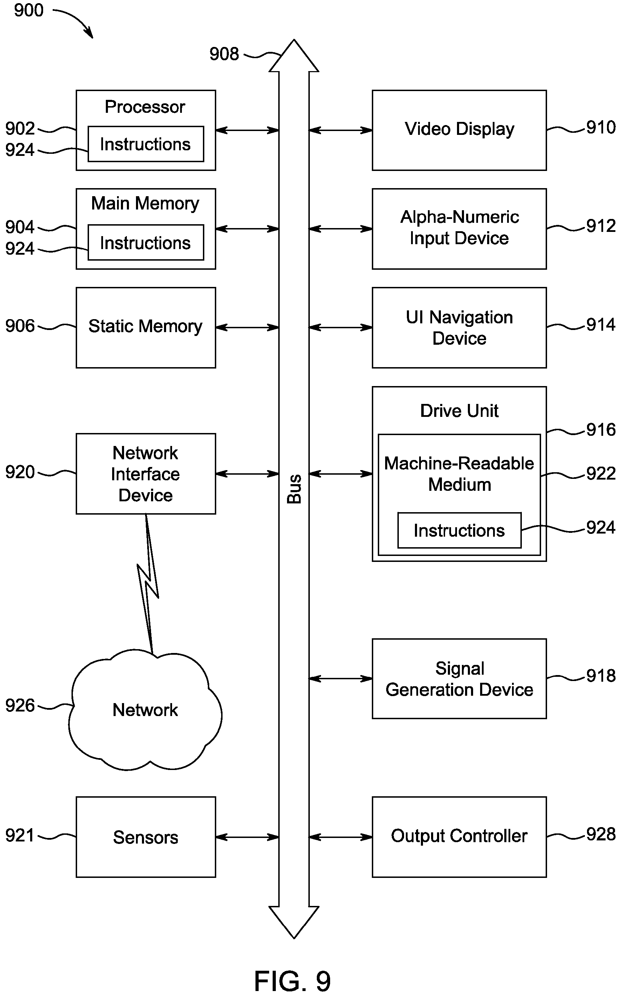

FIG. 9 illustrates another block diagram of a communication device 900 in accordance with some embodiments. The communication device 900 may correspond to the nUE 90 or the wUE 120 of FIG. 1. In alternative embodiments, the communication device 900 may operate as a standalone device or may be connected (e.g., networked) to other communication devices. In a networked deployment, the communication device 900 may operate in the capacity of a server communication device, a client communication device, or both in server-client network environments. In an example, the communication device 900 may act as a peer communication device in peer-to-peer (P2P) (or other distributed) network environment. The communication device 900 may be a UE, eNB, PC, a tablet PC, a STB, a PDA, a mobile telephone, a smart phone, a web appliance, a network router, switch or bridge, or any communication device capable of executing instructions (sequential or otherwise) that specify actions to be taken by that communication device. Further, while only a single communication device is illustrated, the term "communication device" shall also be taken to include any collection of communication devices that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a communication device readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Communication device (e.g., computer system) 900 may include a hardware processor 902 (e.g., a central processing unit (CPU), a graphics processing unit (GPU), a hardware processor core, or any combination thereof), a main memory 904 and a static memory 906, some or all of which may communicate with each other via an interlink (e.g., bus) 908. The communication device 900 may further include a display unit 910, an alphanumeric input device 912 (e.g., a keyboard), and a user interface (UI) navigation device 914 (e.g., a mouse). In an example, the display unit 910, input device 912 and UI navigation device 914 may be a touch screen display. The communication device 900 may additionally include a storage device (e.g., drive unit) 916, a signal generation device 918 (e.g., a speaker), a network interface device 920, and one or more sensors 921, such as a global positioning system (GPS) sensor, compass, accelerometer, or other sensor. The communication device 900 may include an output controller 928, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 916 may include a communication device readable medium 922 on which is stored one or more sets of data structures or instructions 924 (e.g., software) embodying or utilized by any one or more of the techniques or functions described herein. The instructions 924 may also reside, completely or at least partially, within the main memory 904, within static memory 906, or within the hardware processor 902 during execution thereof by the communication device 900. In an example, one or any combination of the hardware processor 902, the main memory 904, the static memory 906, or the storage device 916 may constitute communication device readable media.

While the communication device readable medium 922 is illustrated as a single medium, the term "communication device readable medium" may include a single medium or multiple media (e.g., a centralized or distributed database, and/or associated caches and servers) configured to store the one or more instructions 924.

The term "communication device readable medium" may include any medium that is capable of storing, encoding, or carrying instructions for execution by the communication device 900 and that cause the communication device 900 to perform any one or more of the techniques of the present disclosure, or that is capable of storing, encoding or carrying data structures used by or associated with such instructions. Non-limiting communication device readable medium examples may include solid-state memories, and optical and magnetic media. Specific examples of communication device readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, communication device readable media may include non-transitory communication device readable media. In some examples, communication device readable media may include communication device readable media that is not a transitory propagating signal.

The instructions 924 may further be transmitted or received over a communications network 926 using a transmission medium via the network interface device 920 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 602.11 family of standards known as Wi-Fi®, IEEE 602.16 family of standards known as WiMax®), IEEE 602.15.4 family of standards, a Long Term Evolution (LTE) family of standards, a Universal Mobile Telecommunications System (UMTS) family of standards, peer-to-peer (P2P) networks, among others. In an example, the network interface device 920 may include one or more physical jacks (e.g., Ethernet, coaxial, or phone jacks) or one or more antennas to connect to the communications network 926. In an example, the network interface device 920 may include a plurality of antennas to wirelessly communicate using at least one of single-input multiple-output (SIMO), MIMO, or multiple-input single-output (MISO) techniques. In some examples, the network interface device 920 may wirelessly communicate using Multiple User MIMO techniques. The term "transmission medium" shall be taken to include any intangible medium that is capable of storing, encoding or carrying instructions for execution by the communication device 900, and includes digital or analog communications signals or other intangible medium to facilitate communication of such software.

Although an embodiment has been described with reference to specific example embodiments, it will be evident that various modifications and changes may be made to these embodiments. Accordingly, the specification and drawings are to be regarded in an illustrative rather than a restrictive sense. The accompanying drawings that form a part hereof show, by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, UE, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The Abstract is provided to allow the reader to ascertain the nature of the technical disclosure. It is submitted with the understanding that it will not be used to limit or interpret the scope or meaning of the claims.

**Claims**

1.  An apparatus comprising:

    processing circuitry (704) and memory;
    the processing circuitry (704) to:

    decode radio resource control, RRC, signaling to determine a configuration for a layer 3 filter;
    apply layer 1 filtering (510) to measured samples for each of a plurality of beams (135B, 140B);
    apply an average filter to the layer 1 filtered measured samples, the average filter performing averaging over a set of the layer 1 filtered measured samples corresponding to a set of beams of the plurality of beams (135B, 140B) to form a first output;
    apply, using the layer 3 filter, layer 3 filtering (520) to the first output;
    generate a measurement report based on the layer 3 filtered first output; and
    encode the generated measurement report for transmission to a New Radio, NR, gNodeB, gNB (800), via a radio interface.

2.  The apparatus of claim 1, wherein the measured samples include reference signal received power, RSRP, measurements, and wherein the processing circuitry (704) is further to read, from the memory, the RSRP measurements.

3.  The apparatus of any of claims 1-2, wherein the processing circuitry (704), to apply layer 1 filtering (510), is to average or sum the measured samples for a corresponding beam.

4.  The apparatus of claim 2, wherein the processing circuitry (704), to apply the average filter, is to:

    determine the RSRP measurements for each of the plurality of beams (135B, 140B); and
    perform RSRP beam measurement averaging.

5.  The apparatus of any of claims 1-2, wherein the processing circuitry (704), to apply the layer 3 filter, is to average the layer 1 filtered measured samples over the set of beams of the plurality of beams (135B, 140B) having a layer 1 filtered measured sample exceeding a threshold.

6. The apparatus of any of claims 1-2, wherein the processing circuitry (704), to apply the layer 3 filter, is to average the layer 1 filtered measured samples over a predetermined number of beams having a layer 1 filtered measured sample exceeding a threshold, wherein the predetermined number is configured by the NR gNB (800).

7. The apparatus of any of claims 1-2, wherein the processing circuitry (704), to apply the average filter, is to average the layer 1 filtered measured samples over a predetermined number of RSRP beams measured, wherein the predetermined number of RSRP beams have a highest layer 1 filtered measured sample of the plurality of beams (135B, 140B), and wherein the predetermined number is configured by the NR gNB (800).

8. The apparatus of any of claims 1-2, wherein the processing circuitry (704), to apply the average filter, is to average a plurality of measured RSRP beams exceeding a threshold value, wherein the threshold value is configured by the NR gNB (800).

9. The apparatus of any of claims 1-2, wherein the processing circuitry (704), to apply the layer 3 filtering (520), is to compute based on the layer 1 filtered measured samples from a physical layer and a previous filtered measured sample.

10. The apparatus of any of claims 4-9, wherein the measured samples include reference signal received power, RSRP, measurements, and wherein the layer 1 filtered RSRP measurements used for averaging use a highest RSRP value UE beam for reception.

11. The apparatus of any of claims 1-2, wherein the processing circuitry (704) is to apply the layer 1 filtering (510) to the plurality of beams (135B, 140B), and then evaluate cell measurements associated with the plurality of beams (135B, 140B) to apply layer 3 filtering (520).

12. The apparatus of any of claims 1-2, wherein the processing circuitry (704) is to apply the layer 1 filtering (510) to the plurality of beams (135B, 140B), apply the layer 3 filtering (520), and then evaluate cell measurements associated with the plurality of beams (135B, 140B).

13. The apparatus of any of claims 1-2, wherein the processing circuitry (704) comprises a baseband processor.

14. The apparatus of any of claims 1-2, further comprising transceiver circuitry (706) to:
transmit the generated measurement report to the NR gNB via the radio interface.

15. A machine-readable medium storing instructions for execution by processing circuitry (704), the instructions causing the processing circuitry (704) to:

decode radio resource control, RRC, signaling to determine a configuration for a layer 3 filter;
apply layer 1 filtering (510) to measured samples for each of a plurality of beams (135B, 140B);
apply an average filter to the layer 1 filtered measured samples, the average filter performing averaging over a set of the layer 1 filtered measured samples corresponding to a set of beams of the plurality of beams (135B, 140B) to form a first output;
apply, using the layer 3 filter (520), layer 3 filtering to the first output;
generate a measurement report based on the layer 3 filtered first output; and
encode the generated measurement report for transmission to a New Radio, NR, gNodeB, gNB (800), via a radio interface.

**Patentansprüche**

1. Vorrichtung, die Folgendes umfasst:

eine Verarbeitungsschaltung (704) und einen Speicher;
wobei die Verarbeitungsschaltung (704) zu Folgendem dient:

Decodieren einer Funkressourcensteuerungssignalisierung, RRC-Signalisierung, um eine Konfiguration für einen Schicht-3-Filter zu bestimmen;
Anwenden einer Schicht-1-Filterung (510) auf gemessene Abtastwerte für jeden von mehreren Strahlen (135B, 140B);

Anwenden eines Durchschnittsfilters auf die Schicht-1-gefilterten gemessenen Abtastwerte, wobei der Durchschnittsfilter eine Mitteilung über einen Satz der Schicht-1-gefilterten gemessenen Abtastwerte durchführt, die einem Satz von Strahlen der mehreren Strahlen (135B, 140B) entsprechen, um eine erste Ausgabe zu bilden;

Anwenden, unter Verwendung des Schicht-3-Filters, einer Schicht-3-Filterung (520) auf die erste Ausgabe;

Erzeugen eines Messberichts basierend auf der Schicht-3-gefilterten ersten Ausgabe; und

Codieren des erzeugten Messberichts zur Übertragung an einen neuen Funkknoten, NR, gNodeB, gNB (800), über eine Funkschnittstelle.

2. Vorrichtung nach Anspruch 1, wobei die gemessenen Abtastwerte Referenzsignalempfangsleistungsmessungen, RSRP-Messungen, enthalten und wobei die Verarbeitungsschaltung (704) ferner dazu dient, die RSRP-Messungen aus dem Speicher zu lesen.

3. Vorrichtung nach einem der Ansprüche 1-2, wobei die Verarbeitungsschaltung (704), um eine Schicht-1-Filterung (510) anzuwenden, dazu dient, die gemessenen Abtastwerte für einen entsprechenden Strahl zu mitteln oder zu summieren.

4. Vorrichtung nach Anspruch 2, wobei die Verarbeitungsschaltung (704), um den Durchschnittsfilter anzuwenden, zu Folgendem dient:

Bestimmen der RSRP-Messungen für jeden der Vielzahl von Strahlen (135B, 140B); und

Durchführen einer RSRP-Strahlmessungsmittelung.

5. Vorrichtung nach einem der Ansprüche 1-2, wobei die Verarbeitungsschaltung (704), um den Schicht-3-Filter anzuwenden, dazu dient, die Schicht-1-gefilterten gemessenen Abtastwerte über den Satz von Strahlen der mehreren Strahlen (135B, 140B) mit einem Schicht-1-gefilterten gemessenen Abtastwert, der einen Schwellenwert überschreitet, zu mitteln.

6. Vorrichtung nach einem der Ansprüche 1-2, wobei die Verarbeitungsschaltung (704), um den Schicht-3-Filter anzuwenden, dazu dient, die Schicht-1-gefilterten gemessenen Abtastwerte über eine vorbestimmte Anzahl von Strahlen mit einem Schicht-1-gefilterten gemessenen Abtastwert, der einen Schwellenwert überschreitet, zu mitteln, wobei die vorbestimmte Anzahl durch den NR gNB (800) konfiguriert wird.

7. Vorrichtung nach einem der Ansprüche 1-2, wobei die Verarbeitungsschaltung (704), um den Durchschnittsfilter anzuwenden, dazu dient, die Schicht-1-gefilterten gemessenen Abtastwerte über eine vorbestimmte Anzahl von gemessenen RSRP-Strahlen zu mitteln, wobei die vorbestimmte Anzahl von RSRP-Strahlen einen höchsten Schicht-1-gefilterten gemessenen Abtastwert der mehreren Strahlen (135B, 140B) aufweist und wobei die vorbestimmte Anzahl durch den NR gNB (800) konfiguriert wird.

8. Vorrichtung nach einem der Ansprüche 1-2, wobei die Verarbeitungsschaltung (704), um den Durchschnittsfilter anzuwenden, dazu dient, mehrere gemessene RSRP-Strahlen, die einen Schwellenwert überschreiten, zu mitteln, wobei der Schwellenwert durch den NR gNB (800) konfiguriert wird.

9. Vorrichtung nach einem der Ansprüche 1-2, wobei die Verarbeitungsschaltung (704), um die Schicht-3-Filterung (520) anzuwenden, dazu dient, basierend auf den Schicht-1-gefilterten gemessenen Abtastwerten von einer physikalischen Schicht und einem vorherigen gefilterten gemessenen Abtastwert zu berechnen.

10. Vorrichtung nach einem der Ansprüche 4-9, wobei die gemessenen Abtastwerte Referenzsignalempfangsleistungsmessungen, RSRP-Messungen, enthalten und wobei die Schicht-1-gefilterten RSRP-Messungen, die zur Mittelung verwendet werden, einen höchsten RSRP-Wert-UE-Strahl zum Empfang verwenden.

11. Vorrichtung nach einem der Ansprüche 1-2, wobei die Verarbeitungsschaltung (704) dazu dient, die Schicht-1-Filterung (510) auf die mehreren Strahlen (135B, 140B) anzuwenden und dann Zellenmessungen, die den mehreren Strahlen (135B, 140B) zugeordnet sind, auszuwerten, um eine Schicht-3-Filterung (520) anzuwenden.

12. Vorrichtung nach einem der Ansprüche 1-2, wobei die Verarbeitungsschaltung (704) dazu dient, die Schicht-1-Filterung (510) auf die mehreren Strahlen (135B, 140B) anzuwenden, die Schicht-3-Filterung (520) anzuwenden und dann Zellenmessungen, die den mehreren Strahlen (135B, 140B) zugeordnet sind, auszuwerten.

13. Vorrichtung nach einem der Ansprüche 1-2, wobei die Verarbeitungsschaltung (704) einen Basisbandprozessor umfasst.

14. Vorrichtung nach einem der Ansprüche 1-2, die ferner eine Sender/Empfänger-Schaltung (706) für Folgendes umfasst:
Übertragen des erzeugten Messberichts an den NR gNB über die Funkschnittstelle.

15. Maschinenlesbares Medium, das Anweisungen zur Ausführung durch eine Verarbeitungsschaltung (704) speichert, wobei die Anweisungen die Verarbeitungsschaltung (704) zu Folgendem veranlassen:

Decodieren einer Funkressourcensteuerungssignalisierung, RRC-Signalisierung, um eine Konfiguration für einen Schicht-3-Filter zu bestimmen;
Anwenden einer Schicht-1-Filterung (510) auf gemessene Abtastwerte für jeden von mehreren Strahlen (135B, 140B);
Anwenden eines Durchschnittsfilters auf die Schicht-1-gefilterten gemessenen Abtastwerte, wobei der Durchschnittsfilter eine Mittelung über einen Satz der Schicht-1-gefilterten gemessenen Abtastwerte durchführt, die einem Satz von Strahlen der mehreren Strahlen (135B, 140B) entsprechen, um eine erste Ausgabe zu bilden;
Anwenden, unter Verwendung des Schicht-3-Filters (520), einer Schicht-3-Filterung auf die erste Ausgabe;
Erzeugen eines Messberichts basierend auf der Schicht-3-gefilterten ersten Ausgabe; und
Codieren des erzeugten Messberichts zur Übertragung an einen neuen Funkknoten, NR, gNodeB, gNB (800), über eine Funkschnittstelle.

## Revendications

1. Un appareil comprenant :

une circuiterie de traitement (704) et une mémoire ;
la circuiterie de traitement (704) servant à :

décoder une signalisation de contrôle de ressource radio, RRC, pour déterminer une configuration pour un filtrage de couche 3 ;
appliquer un filtrage de couche 1 (510) à des échantillons mesurés, pour chacun d'une pluralité de faisceaux (135B, 140B) ;
appliquer un filtrage de moyenne aux échantillons mesurés filtrés de couche 1, le filtrage de moyenne effectuant un moyennage sur un ensemble des échantillons mesurés filtrés de couche 1 correspondant à un ensemble de faisceaux de la pluralité de faisceaux (135B, 140B), pour former une première sortie ;
appliquer, à l'aide du filtrage de couche 3, un filtrage de couche 3 (520) à la première sortie ;
générer une notification de mesure sur la base de la première sortie filtrée de couche 3 ; et
coder la notification de mesure générée pour la transmettre à un gNodeB, gNB (800), New Radio, NR, via une interface radio.

2. L'appareil de la revendication 1, dans lequel les échantillons mesurés comprennent des mesures de puissance reçue de signal de référence, RSRP, et dans lequel la circuiterie de traitement (704) doit en outre lire, dans la mémoire, les mesures RSRP.

3. L'appareil de l'une des revendications 1 à 2, dans lequel la circuiterie de traitement (704), pour appliquer le filtrage de couche 1 (510), doit moyenner ou additionner les mesures RSRP pour un faisceau correspondant.

4. L'appareil de la revendication 2, dans lequel la circuiterie de traitement (704), pour appliquer le filtrage de moyenne, doit :

déterminer les mesures RSRP pour chacun de la pluralité de faisceaux (135B, 140B) ; et
effectuer un moyennage de mesure de faisceau RSRP.

5. L'appareil de l'une des revendications 1 à 2, dans lequel la circuiterie de traitement (704), pour appliquer le filtrage de couche 3, doit moyenner les échantillons mesurés filtrés de couche 1 sur l'ensemble de faisceaux de la pluralité de faisceaux (135B, 140B) dont un échantillon mesuré filtré de couche 1 dépasse un seuil.

6. L'appareil de l'une des revendications 1 à 2, dans lequel la circuiterie de traitement (704), pour appliquer le filtrage de couche 3, doit moyenner les échantillons mesurés filtrés de couche 1 sur un nombre prédéterminé de faisceaux dont un échantillon mesuré filtré de couche 1 dépasse un seuil, le nombre prédéterminé étant configuré par le gNB NR (800).

7. L'appareil de l'une des revendications 1 à 2, dans lequel la circuiterie de traitement (704), pour appliquer le filtrage de moyenne, doit moyenner les échantillons mesurés filtrés de couche 1 sur un nombre prédéterminé de faisceaux RSRP mesurés, dans lequel le nombre prédéterminé de faisceaux RSRP ont un échantillon mesuré filtré de couche 1 le plu élevé parmi la pluralité de faisceaux (135B, 140B), et dans lequel le nombre prédéterminé est configuré par le gNB NR (800).

8. L'appareil de l'une des revendications 1 à 2, dans lequel la circuiterie de traitement (704), pour appliquer le filtrage de moyenne, doit moyenner une pluralité de faisceaux RSRP mesurés qui dépassent une valeur de seuil, la valeur de seuil étant configurée par le gNB NR (800).

9. L'appareil de l'une des revendications 1 à 2, dans lequel la circuiterie de traitement (704), pour appliquer le filtrage de couche 3 (520), doit effectuer un calcul basé sur les échantillons mesurés filtrés de couche 1 issus d'une couche physique et sur un échantillon mesuré filtré antérieur.

10. L'appareil de l'une des revendications 4 à 9, dans lequel les échantillons mesurés comprennent des mesures de puissance reçue de signal de référence, RSRP, et dans lequel les mesures RSRP filtrées de couche 1 utilisées pour le moyennage utilisent la valeur RSRP la plus élevée d'un faisceau d'UE en réception.

11. L'appareil de l'une des revendications 1 à 2, dans lequel la circuiterie de traitement (704) doit appliquer le filtrage de couche 1 (510) à la pluralité de faisceaux (135B, 140B), puis évaluer des mesures de cellule associées à la pluralité de faisceaux (135B, 140B) pour appliquer le filtrage de couche 3 (520).

12. L'appareil de l'une des revendications 1 à 2, dans lequel la circuiterie de traitement (704) doit appliquer le filtrage de couche 1 (510) à la pluralité de faisceaux (135B, 140B), appliquer le filtrage de couche 3 (520), puis évaluer des mesures de cellule associées à la pluralité de faisceaux (135B, 140B).

13. L'appareil de l'une des revendications 1 à 2, dans lequel la circuiterie de traitement (704) comprend un processeur de bande de base.

14. L'appareil de l'une des revendications 1 à 2, comprenant en outre une circuiterie émettrice-réceptrice (706) pour : transmettre la notification de mesure générée au gNB NR via l'interface radio.

15. Un support lisible par machine stockant des instructions à exécuter par une circuiterie de traitement (704), les instructions faisant en sorte que la circuiterie de traitement (704) :

décode une signalisation de contrôle de ressource radio, RRC, pour déterminer une configuration pour un filtrage de couche 3 ;
applique un filtrage de couche 1 (510) à des échantillons mesurés, pour chacun d'une pluralité de faisceaux (135B, 140B) ;
applique un filtrage de moyenne aux échantillons mesurés filtrés de couche 1, le filtrage de moyenne effectuant un moyennage sur un ensemble des échantillons mesurés filtrés de couche 1 correspondant à un ensemble de faisceaux de la pluralité de faisceaux (135B, 140B), pour former une première sortie ;
applique, à l'aide du filtrage de couche 3, un filtrage de couche 3 (520) à la première sortie ;
génère une notification de mesure sur la base de la première sortie filtrée de couche 3 ; et
code la notification de mesure générée pour la transmettre à un gNodeB, gNB (800), New Radio, NR, via une interface radio.

FIG. 1A

FIG. 1B

FIG. 2

EP 4 274 374 B1

FIG. 3

FIG. 4

EP 4 274 374 B1

FIG. 5

FIG. 6

FIG. 7

EP 4 274 374 B1

801

Evolved Node-B (eNB)

| PHY | 802 |
| MAC | 804 |

| Transceiver Circuitry | 812 |

| Processing | 806 |

| Memory | 808 |

| Interface | 814 |

800

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Measurements for Cell-level Mobility in High Frequency NR. *3GPP draft R2-165150*, 12 August 2016